# EUROPÄISCHE PATENTANMELDUNG

(11) **EP 1 369 987 A2**
(43) Veröffentlichungstag der Anmeldung: **10.12.2003**
(21) Anmeldenummer: 03101411.1
(22) Anmeldetag: 19.05.2003
(51) Int. Cl.: H02P 7/00

(54) **Vollbrückenschaltung**

(30) Priorität: 29.05.2002 DE 10224244
(71) Anmelder: SIEMENS AKTIENGESELLSCHAFT, 80333 München (DE)
(72) Erfinder: Komaromi, Patrick, 1010 Wien (AT); Svobodnik, Gregor, 1220 Wien (AT)

(57) **Zusammenfassung**

Der Kostenaufwand für eine über eine Vollbrücken-Schaltung mit zumindest vier Schaltelementen (S1-S4) je Drehrichtung (nl bzw. n2) mit unterschiedlicher Belastung (I_{L,1} bzw. I_{L,2}) betreibbare elektrische Antriebsvorrichtung (M), insbesondere motorischer Kraftfahrzeug-Fensterheber oder Kraftfahrzeug-Gurtroller, kann dadurch gemindert werden, dass die Schaltelemente (S1-S4) im Sinne einer asymmetrischen Vollbrücke jeweils individuell entsprechend ihrer unterschiedlichen Maximalbelastung dimensioniert sind.

## Beschreibung

Die Erfindung bezieht sich auf eine über eine Vollbrücken-Schaltung mit zumindest vier Brücken-Schaltelementen in zwei Richtungen mit je Antriebs-Richtung unterschiedlicher Belastung betreibbare elektrische Antriebsvorrichtung, insbesondere in beiden Drehrichtungen über die Brücken-Schaltelemente ansteuerbarer Elektromotor, gemäß Patentanspruch 1.

Vollbrücken der vorgenannten Art weisen in der Regel zwischen den Anschlüssen einer speisenden Gleichspannung zwei parallele Brückenzweige mit zumindest je zwei in Reihe angeordneten Schaltelementen auf; der zu steuernde Antrieb, insbesondere in Form eines elektrischen Kommutator-Motors, ist zwischen den Verbindungspunkten der Reihenschaltung der Schaltelemente und somit in einem Brückenquerzweig zu den parallelen, mit den Schaltelementen bestückten Brückenzweigen angeschlossen. Je nach Drehrichtung fließt ein Laststrom in einem Brückenpfad, der entweder das erste Schaltelement des einen Brückenzweiges und das zweite Schaltelement des anderen Brückenzweiges oder das erste Schaltelement des anderen Brückenzweiges und das zweite Schaltelement des einen Brückenzweiges umfasst.

Derartige Antriebe werden verstärkt für Hilfsantriebe in Kraftfahrzeugen, insbesondere für motorische Fensterheber oder für motorische Gurtroller, eingesetzt.

Gemäß Aufgabe vorliegender Erfindung soll bei Antrieben der vorgenannten Art bei gewährleisteter Betriebstüchtigkeit der Herstellungs-Aufwand gemindert werden.

Die Lösung der vorgenannten Aufgabe gelingt erfindungsgemäß durch eine Antriebsvorrichtung gemäß Patentanspruch 1; vorteilhafte Ausgestaltungen sind jeweils Gegenstand der Unteransprüche.

Die jeweilige, insbesondere die bestimmte maximale, Belastung ist in der Regel durch thermische Daten, d.h. nicht allein durch die maximale Stromstärke definiert.

Ausgehend von der Erkenntnis, dass Antriebe der vorgenannten bzw. ähnlichen Art je nach Drehrichtung unterschiedlich belast sind, ist durch die erfindungsgemäße spezifische Auswahl der Brücken-Schaltelemente entsprechend ihrer Anordnung und Belastung in der Vollbrücke im Sinne einer entsprechenden asymmetrischen Vollbrücke eine merkliche Kostenminimierung, insbesondere bei Einsatz von elektronischen Schaltelementen, möglich, da eine kostenaufwendige Überdimensionierung der Schaltelemente in den bei einer der Drehrichtung weniger belasteten Brückenpfaden gezielt vermeidbar ist.

Die Erfindung sowie weitere vorteilhafte Ausgestaltungen gemäß Merkmalen der Unteransprüche werden im folgenden anhand eines Beispiels einer Vollbrücken-Ansteuerung für einen Kommutator-Motor mit je Drehrichtung unterschiedlicher Belastung in der Zeichnung näher beschrieben; darin zeigen:
- FIG 1: eine Vollbrücken-Schaltung mit vier Brücken Schaltelementen, die zum Betrieb eines Kommutatormotors in der einen Drehrichtung voll ausgesteuert, d.h. ungetaktet und einem bestimmten Laststrom I_{L1} belastet sind;
- FIG 2: die Vollbrücken-Schaltung gemäß FIG 1 mit Vollaussteuerung in der Gegen-Drehrichtung und einem Laststrom I_{L2} = 0,5 I_{L1};
- FIG 3: die Vollbrücken-Schaltung gemäß FIG 1 mit einer Teilansteuerung entsprechend einem Taktverhältnis der Haupt-Schaltelemente von 75% und einem Freilaufstrom während der Taktpausen;
- FIG 4: die Vollbrücken-Schaltung gemäß FIG 2 mit einer Teilansteuerung entsprechend einem Taktverhältnis der Haupt-Schaltelemente von 50% und einem Freilaufstrom während der Taktpausen.

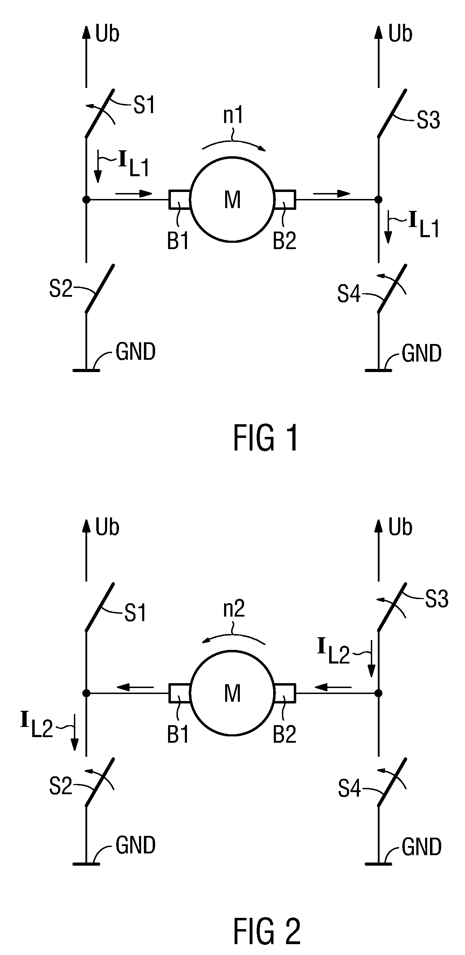

FIG 1 bis 4 gehen aus von einer Vollbrücken-Schaltung mit in Reihe geschalteten, einen ersten Brückenzweig bildenden ersten und zweiten Brücken-Schaltelementen S1;S2, vorzugsweise in der Form von elektronischen Schaltelementen, und mit in Reihe geschalteten, einen parallelen zweiten Brückenzweig bildenden dritten und vierten Brücken-Schaltelementen S3;S4.

Die Endpunkte der Brückenzweige sind zur Spannungsversorgung mit ihrem einen Ende an eine Batteriespannung Ub (Pluspol) und mit ihrem anderen Ende an GND (Masse-Minuspol) angeschlossen.

Zwischen dem Verbindungspunkt des ersten Brücken-Schaltelementes S1 mit dem zweiten Brücken-Schaltelement S2 einerseits und dem Verbindungspunkt des dritten Brücken-Schaltelementes S3 mit dem vierten Brücken-Schaltelement S4 ist in einem Querzweig als Elektromotor M ein Kommutator-Motor mit Einspeisungen über Bürsten B1;B2 angeschlossen.

Bei einer Vollaussteuerung und geschlossenen Brücken-Schaltelementen S1;S4 fließt ein erster Laststrom I_{L1} und treibt den Elektromotor M in einer ersten Drehrichtung n1 an; bei einer Vollansteuerung und geschlossenen Brücken-Schaltelementen (S2;S3) fließt ein zweiter Laststrom I_{L2} von z.B. 50% I_{L1} und treibt den Elektromotor M in einer zweiten, zur ersten Drehrichtung n1 umgekehrten Drehrichtung n2 mit entsprechend verringerter Belastung an.

Ein Lastfall mit derart bestromtem Brückenzweig S1 bzw.S4 kann insbesondere gegeben sein beim Heben eines Kraftfahrzeug-Fensters durch einen motorischen Fensterheber oder beim Straffen, insbesondere im Crashfall, eines motorischen Kraftfahrzeug-Gurtantrieb; ein Lastfall mit derart bestromten Brückenzweig S3 bzw.S2 kann insbesondere gegeben sein beim Senken eines Kraftfahrzeug-Fensters durch einen motorischen Fensterheber bzw. beim Lösen eines Gurtes durch einen motorischen Kraftfahrzeug-Gurtantrieb.

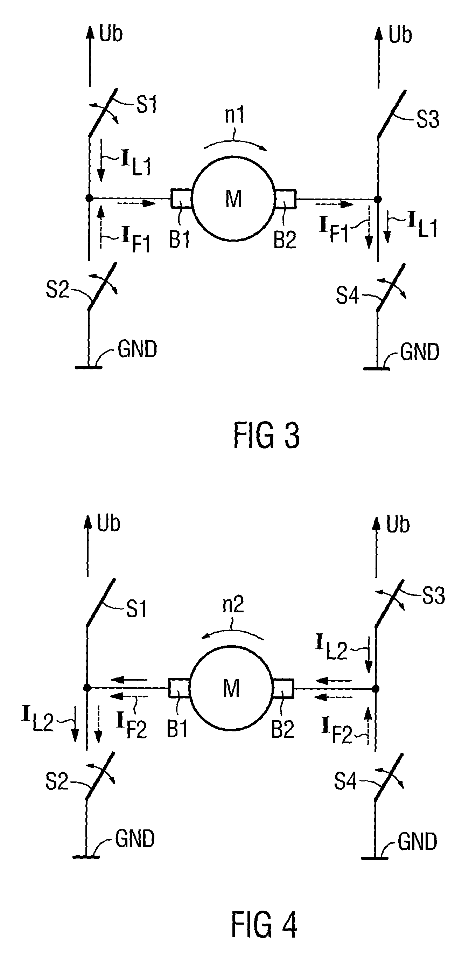

Gemäß FIG 3 sei von einem Laststrom I_{L1} über den Brückenzweig mit den Schaltelementen S1;S4 und einer Motor-Drehrichtung n1 sowie im Vergleich zu FIG 1 von einem Takt- bzw. Tastverhältnis von z.B. 75% zur Drehzahlminderung ausgegangen; in diesem Fall ergeben sich unter Annahme eines zu berücksichtigenden, mit gestrichelter Linienkontur gezeichneten, Freilaufstromes durch die Brücken - zum Abbau der magnetischen Energie in den Taktpausen - für die Schaltelemente S4;S2 folgende Belastungsverhältnisse:

| | | |
|---|---|---|
| S1 mit | 75% I_{L1} | |
| S2 mit | 25% I_{L1} | (Freilaufstrom) |
| S3 mit | 0% I_{L1} | |
| S4 mit | 100% I_{L2} | (Motor-Laststrom) |

Gemäß FIG 4 sei von einem Laststrom I_{L2} = 0,5 I_{L1} über den Brückenzweig mit den Schaltelementen S3;S2 und einer Motor-Drehung n2 sowie im Verhältnis zu FIG 1 bzw. FIG 2 von einem Takt- bzw. Tastverhältnis von z.B. 50% zur Drehzahlminderung ausgegangen; in diesem Fall ergeben sich folgende Belastungsverhältnisse:

| | | |
|---|---|---|
| S1 mit | 0% I_{L2} ? | 0% I_{L1} |
| S2 mit | 100% I_{L2} ? | 50% I_{L1} |
| S3 mit | 50% U_{L2} ? | 25% I_{L1} |
| S4 mit | 50% I_{L2} ? | 25% I_{L1} |

Durch Überlagerung beider vorgenannter Lastfälle mit dem angenommenen jeweiligen Tast- bzw. Taktverhältnis ergibt sich folgende individuelle Maximalbelastung der einzelnen Brücken-Schaltelemente, die erfindungsgemäß zur Optimierung bei der Auswahl und Dimensionierung der Brücken-Schaltelemente im Sinne einer asymmetrischen Vollbrücke zugrundegelegt wird.

| | |
|---|---|
| S1 ? | 75% I_{L1} |
| S2 ? | 50% I_{L2} |
| S3 ? | 25% I_{L1} |
| S4 ? | 100% I_{L2} |

In vorteilhafter Weise ist eine Taktfrequenz über der Hörgrenze, insbesondere größer als 20 kHz, vorgesehen; aufgrund dieser Taktfrequenz kann bei der Belastungsdefinierung in vorgenannten Ausführungsbeispielen davon ausgegangen werden, dass gemäß FIG 3 das vierte Brücken-Schaltelement S4 gleichzeitig sowohl mit dem Laststrom I_{L1} als auch mit dem ersten Freilaufstrom I_{F1} und dass gemäß FIG 4 das zweite Brücken-Schaltelement S2 sowohl mit dem zweiten Laststrom I_{L2} als auch mit dem zweiten Freilaufstrom I_{F2} belastet wird.

Der wesentliche Lösungsgedanke vorliegender Erfindung lässt sich wie folgt zusammenfassen:
Der Kostenaufwand für eine über eine Vollbrücken-Schaltung mit zumindest vier Schaltelementen S1-S4 je Drehrichtung n1 bzw. n2 mit unterschiedlicher Belastung I_{L1} bzw. I_{L2} betreibbare elektrische Antriebsvorrichtung, insbesondere motorischer Kraftfahrzeug-Fensterheber oder Kraftfahrzeug-Gurtstraffer, kann dadurch gemindert werden, dass die Schaltelemente S1-S4 im Sinne einer asymmetrischen Vollbrücke jeweils individuell entsprechend ihrer unterschiedlichen Maximalbelastung dimensioniert sind.

## Patentansprüche

1. Über eine Vollbrücken-Schaltung mit zumindest vier Brücken-Schaltelementen (S1-S4) in zwei Richtungen mit je Antriebs-Richtung unterschiedlicher Belastung betreibbare elektrische Antriebsvorrichtung, insbesondere in beiden Drehrichtungen (n1;n2) über die Brücken-Schaltelemente (S1-S4) ansteuerbarer Elektromotor (M),
- mit in ihrer Leistungsbemessung entsprechend ihrer jeweils maximalen Belastung im Sinne einer asymmetrischen Vollbrücke ausgelegten einzelnen Brücken-Schaltelementen (S1-S4).

2. Antriebsvorrichtung nach Anspruch 1
- mit mechanischen Schaltern, insbesondere Relais, als Brücken-Schaltelemente (S1-S4).

3. Antriebsvorrichtung nach Anspruch 1
- mit elektronischen Schaltern, insbesondere Thyristoren, als Brücken-Schaltelemente (S1-S4).

4. Antriebsvorrichtung nach Anspruch 3
- mit im Sinne einer steuerbaren Geschwindigkeit der Antriebsvorrichtung getakteten elektronischen Brücken-Schaltelementen (S1-S4), insbesondere Thyristoren.

5. Antriebsvorrichtung nach Anspruch 4
- mit einer über der Hörgrenze liegenden Taktfrequenz, insbesondere über 20 kHz, für die getakteten elektronischen Brücken-Schaltelemente (S1-S4).

6. Antriebsvorrichtung nach Anspruch 4 und/oder 5
- mit einer Bestimmung der maximalen Belastung des jeweiligen Brücken-Schaltelementes (S1-S4) unter Berücksichtigung des eigentlichen Laststromes (I_{L1} bzw. I_{L2}) in dem dieses Brücken-Schaltelement enthaltenden einen Brückenpfad und eines Freilaufstromes (I_{F1} bzw. I_{F2}) in dem dieses Brücken-Schaltelement (S1-S4) enthaltenden Freilaufzweig bei getakteter Laststromansteuerung über den anderen Brücken-Zweig.

7. Antriebsvorrichtung nach zumindest einem der Ansprüche 1-6
- mit einer Anwendung für einen motorischen FensterheberAntrieb bzw. einen Gurtroller-Antrieb für ein Kraftfahrzeug.

8. Antriebsvorrichtung nach Anspruch 7
- mit über das Schalt-Taktverhältnis der Brücken-Schaltelemente (S1-S4) drehzahlgesteuertem Fensterheber-Antriebsmotor (M) bzw. Gurtroller-Wickelmotor (M).

9. Antriebsvorrichtung nach Anspruch 7 und/oder 8
- mit einer höheren Belastung im Betrieb Fensterheben bzw. Gurtstraffen bei einer ersten Drehrichtung (n1);
- mit einer niederen Belastung im Betrieb Fenstersenken bzw. Gurtlösen bei einer zweiten, gegenüber der ersten umgekehrten Drehrichtung (n2).

10. Antriebsvorrichtung nach zumindest einem der Ansprüche 7-9, insbesondere nach Anspruch 9
- mit einer Leistungsbemessung für das erste Brücken-Schaltelement (S1) von 75% eines angenommenen Laststromes (I_{L1});
- mit einer Leistungsbemessung für das zweite Brücken-Schaltelement (S2) von 50% eines angenommenen Laststromes (I_{L1});
- mit einer Leistungsbemessung für das dritte Brücken-Schaltelement (S3) von 25% eines angenommenen Laststromes (I_{L1});
- mit einer Leistungsbemessung für das vierte Brücken-Schaltelemente (S4) von 100% eines angenommenen Laststromes (I_{L1}).
